(19) Europäisches Patentamt
European Patent Office
Office européen des brevets

(11) EP 1 544 273 B1

(12) **EUROPÄISCHE PATENTSCHRIFT**

(45) Veröffentlichungstag und Bekanntmachung des Hinweises auf die Patenterteilung:
**18.06.2008 Patentblatt 2008/25**

(51) Int Cl.:
***C09J 133/00*** *(2006.01)* ***C09J 131/00*** *(2006.01)*

(21) Anmeldenummer: **04105795.1**

(22) Anmeldetag: **16.11.2004**

(54) **Haftklebemasse**

adhesive

adhésive

(84) Benannte Vertragsstaaten:
**AT BE BG CH CY CZ DE DK EE ES FI FR GB GR HU IE IS IT LI LU MC NL PL PT RO SE SI SK TR**

(30) Priorität: **16.12.2003 DE 10359350**

(43) Veröffentlichungstag der Anmeldung:
**22.06.2005 Patentblatt 2005/25**

(73) Patentinhaber: **tesa AG**
**20253 Hamburg (DE)**

(72) Erfinder:
- **Husemann, Marc**
  **22605, Hamburg (DE)**
- **Zöllner, Stephan**
  **21244 Buchholz / Nordheide (DE)**

(56) Entgegenhaltungen:
**EP-A- 1 302 521**
**US-A1- 2001 007 003**
**US-A1- 2003 096 075**
**US-A1- 2003 113 533**

EP 1 544 273 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft eine Haftklebemassen, ein Verfahren zu deren Herstellung sowie Verwendungen einer derartigen Haftklebemasse. Die Erfindung betrifft insbesondere eine Acrylathaftklebemasse.

Für industrielle Haftklebeband-Anwendungen werden sehr häufig Polyacrylathaftklebemassen eingesetzt. Polyacrylate besitzen diverse Vorteile gegenüber anderen Elastomeren. Sie sind sehr stabil gegenüber UV-Licht, Sauerstoff und Ozon. Synthetische und Naturkautschukklebemassen enthalten zumeist Doppelbindungen, die diese Klebemassen gegen die vorher genannten Umwelteinflüsse labil machen. Ein weiterer Vorteil von Polyacrylaten ist ihre Einsatzfähigkeit in einem relativ weiten Temperaturbereich.

Polyacrylathaftklebemassen werden in der Regel in Lösung durch eine freie radikalische Polymerisation hergestellt. Die Polyacrylate werden in Lösung oder aus der Schmelze über einen Streichbalken auf das entsprechende Trägermaterial beschichtet und anschließend getrocknet. Zur Steigerung der Kohäsion wird das Polymer vernetzt. Die Härtung verläuft thermisch, durch UV-Vernetzung oder durch ES-Härtung (wobei "ES" für Elektronenstrahlung steht). Der beschriebene Prozeß ist relativ kostenaufwendig, so daß die doppelseitigen Haftklebebänder auf Basis von Acrylathaftklebemassen relativ teuer sind.

Eine Verbesserung der Eigenschaften, die jedoch auch mit einer Erhöhung der Kosten verbunden ist, wird durch einen geschäumten Polyacrylatträger erreicht. Diese Produkte sind kommerziell unter der Bezeichnung VHB (Very High Bonding) bei 3M erhältlich.

Ein weiterer Nachteil von doppelseitigen Klebebändern ist der Herstellungsprozeß, da zumindest in einem Schritt die Haftklebemasse erst auf einen Prozeßliner beschichtet wird und dann die Haftklebemasse auf den Träger des doppelseitigen Haftklebebandes kaschiert wird.

Weiterhin sind bereits seit langer Zeit Transfer-Tapes kommerziell erhältlich. Ein Transfer-Tape besteht aus einer Haftklebemasse, die direkt auf dem Release-Liner beschichtet wird. Zur Verklebung von Substraten wird die Haftklebemasse zunächst auf ein Substrat appliziert, der Release-Liner abgezogen, und dann das zweite zu verklebende Substrat appliziert, so daß nur der Haftklebefilm zwischen den zwei Substraten liegt. Diese Haftklebemassen lassen sich für einen Temperaturbereich bis zu 200 °C einsetzen. Für diese Anwendungen werden bevorzugt Reinacryat-Transfer-Tapes wie z. B. 3M 467 oder 468 eingesetzt, die dann aber wiederum - aufgrund ihres einschichtigen Aufbaus - keine hohen Klebkräfte besitzen.

Aufgabe der Erfindung ist es, die Nachteile nach dem Stand der Technik zu beseitigen. Es soll insbesondere eine Haftklebemasse angegeben werden, die hohe Klebekräfte aufweist, die die doppelseitigen Haftklebebänder nach dem Stand der Technik ersetzen kann, im Vergleich zu diesen kostengünstig und darüber hinaus über einen weiten Temperaturbereich einsetzbar ist. Ferner sollen ein Verfahren zur Herstellung einer solchen Haftklebemasse sowie eine Verwendung einer derartigen Haftklebemasse angegeben werden.

Diese Aufgabe wird durch die Merkmale der Ansprüche 1 sowie 7 bis 9 gelöst. Zweckmäßige Ausgestaltungen der Erfindungen ergeben sich aus den Merkmalen der Ansprüche 2 bis 6.

Nach Maßgabe der Erfindung ist eine Haftklebemasse vorgesehen, die

(a) eine erste Schicht einer ersten Polyacrylathaftklebemasse, die zumindest 50 Gew.-%, bezogen auf die erste Polyacrylathaftklebemasse, eines Acrylsäureesters und/oder Methacrylsäureesters der Formel $CH_2=C(R_1)(COOR_2)$ umfaßt, wobei $R_1$ H oder $CH_3$ darstellt und $R_2$ eine lineare, verzweigte oder cyclische Alkylkette mit 1 bis 20 Kohlenstoffatomen darstellt;

(b) eine zweite Schicht, umfassend

(b1) ein Polyacrylat, das zumindest 50 Gew.-%, bezogen auf das Polyacrylat, eines Acrylsäureesters und/oder Methacrylsäureesters mit der Formel $CH_2=CH(R_1)(COOR_2)$ umfaßt, wobei $R_1$ H oder $CH_3$ darstellt und $R_2$ eine lineare, verzweigte oder cyclische Alkylkette mit 1 bis 20 Kohlenstoffatomen darstellt, und

(b2) 15 bis 60 Gew.-%, bezogen auf die zweite Schicht, Kreide; sowie

(c) eine dritte Schicht einer zweiten Polyacrylathaftklebemasse, die zumindest 50 Gew.-%, bezogen auf die zweite Polyacrylathaftklebemasse, eines Acrylsäureesters und/oder Methacrylsäureesters der Formel $CH_2=CH(R_1)(COOR_2)$ umfaßt, wobei $R_1$ H oder $CH_3$ darstellt und $R_2$ eine lineare, verzweigte oder cyclische Alkylkette mit 1 bis 20 Kohlenstoffatomen darstellt;

umfaßt.

Die erfindungsgemäße Haftklebemasse ist somit eine dreischichtige Acrylathaftklebemasse. Im folgenden werden die erste Schicht als Schicht A, die zweite Schicht als Schicht B und die dritte Schicht als Schicht C bezeichnet.

Die erfindungsgemäße Haftklebemasse hat einen dreischichtigen Aufbau, wobei Schicht B zwischen Schicht A und Schicht C angeordnet ist. Auf diese Weise kann der bei doppelseitigen Haftklebebändern erforderliche Träger ersetzt werden, wodurch die Aufgabe der vorliegenden Erfindung gelöst wird.

Fig. 1 zeigt in schematischer Darstellung eine erfindungsgemäße, dreischichtige Haftklebemasse, wobei Bezugszeichen 1 die erste Schicht (Schicht A), Bezugszeichen 2 die zweite Schicht (Schicht B) und Bezugszeichen 3 die dritte Schicht (Schicht C) kennzeichnet.

In einer bevorzugten erfindungsgemäßen Ausführungsform ist Schicht A mit Schicht C identisch.

Die Monomere für Schicht A und Schicht C werden bevorzugt dermaßen gewählt, daß die resultierenden Polymere bei Raumtemperatur oder höheren Temperaturen als Haftklebemassen eingesetzt werden können, insbesondere derart, daß die resultierenden Polymere haftklebende Eigenschaften entsprechend des "Handbook of Pressure Sensitive Adhesive Technology" von Donatas Satas (van Nostrand, New York 1989) besitzen.

Weiterhin kann die erfindungsgemäße Haftklebemasse - je nach gewünschten Eigenschaften unterschiedliche Schichtdicken besitzen. Generell können zur Klebkraftsteigerung höhere Schichtdicken eingesetzt werden. Zur Steigerung der Kohäsion werden in der Regel dünnere Haftklebe-Schichten A und C gewählt. In einer bevorzugten Auslegung beträgt die Schichtdicke der Schicht A zwischen 5 und 150 μm, sehr bevorzugt zwischen 10 und 100 μm, die Schichtdicke der Schicht B zwischen 10 μm und 1,5 mm, sehr bevorzugt zwischen 50 μm und 1000 μm, die Schichtdicke der Schicht C zwischen 5 und 150 μm, sehr bevorzugt zwischen 10 und 100 μm. In einer sehr bevorzugten Auslegung sind die Schichtdicken der Schichten A und C gleich.

<u>Zusammensetzung der Schichten A, B und C</u>

In einer bevorzugten Ausführungsform werden Acryl- oder Methacrylmomonere für die drei Schichten A, B und C eingesetzt, die aus Acryl- und Methacrylsäureester bestehen, wobei die Alkylgruppen 4 bis 14 C-Atome, bevorzugt 4 bis 9 C-Atome, umfassen. Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigte Isomere, wie z. B. Isobutylacrylat, 2-Ethylhexylacrylat, 2-Ethylhexylmethacrylat, Isooctylacrylat, Isooctylmethacrylat.

Weitere einzusetzende Verbindungsklassen sind monofunktionelle Acrylate bzw. Methacrylate von überbrückten Cycloalkylalkoholen, bestehend aus zumindest 6 C-Atomen. Die Cycloalkylalkohole können auch substituiert sein, z. B. durch C-1-6-Alkylgruppen, Halogenatome oder Cyanogruppen. Spezifische Beispiele sind Cyclohexylmethacrylate, Isobornylacrylat, Isobornylmethacrylate und 3,5-Dimethyladamantylacrylat.

Neben den oben genannten Acrylaten und Methacrylaten können als weitere Comonomere auch moderate basische Monomere sind wie z. B. N,N-Dialkylsubstituierte Amide, wie z. B. N,N-Dimethylacrylamid, N,N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Butoxymethyl)methacrylamid, N-Methylolacrylamid, N-(Ethoxymethyl)acrylamid, N-Isopropylacrylamid, wobei diese Aufzählung nicht abschließend ist, eingesetzt werden.

Weitere Beispiele für Comonomere sind Maleinsäureanhydrid, Itaconsäureanhydrid, Glyceridylmethacrylat, Phenoxyethylacrlylat, Phenoxyethylmethacrylat, 2-Butoxyethylmethacrylat, 2-Butoxyethylacrylat, Cyanoethylmethacrylat, Cyanoethylacrylat, Glycerylmethacrylat und Tetrahydrofufurylacriyat, wobei diese Aufzählung nicht abschließend ist.

In einer weiteren sehr bevorzugten Ausführungsform werden als Comonomere Vinylester, Vinylether, Vinylhalogenide, Vinylidenhalogenide, Vinylverbindungen mit aromatischen Cyclen und Heterocyclen in α-Stellung eingesetzt. Auch hier seien einige Beispiele genannt, wobei die Aufzählung nicht abschließend ist: Vinylacetat, Vinylformamid, Vinylpyridin, Ethylvinylether, Vinylchlorid, Vinylidenchlorid und Acrylonitril.

Weiterhin werden in einer weiteren sehr bevorzugten Ausführungsform Photoinitiatoren mit einer copolymerisierbaren Doppelbindung eingesetzt. Als Photoinitiatoren sind Norrish-I- und -II-Photoinitiatoren geeignet. Beispiele sind z. B. Benzoinacrylat und ein acryliertes Benzophenon der Fa. UCB (Ebecryl P 36®). Im Prinzip können alle dem Fachmann bekannten Photoinitiatoren copolymerisiert werden, die das Polymer über einen Radikalmechanismus unter UV-Bestrahlung vernetzen können. Ein Überblick über mögliche einsetzbare Photoinitiatoren, die mit einer Doppelbindung funktionalisiert werden können, wird in Fouassier: "Photoinititation, Photopolymerization and Photocuring: Fundamentals and Applications", Hanser-Verlag, München 1995, gegeben. Ergänzend wird auf Carroy et al. in "Chemistry and Technology of UV and EB Formulation for Coatings, Inks and Paints", Oldring (Hrsg.), 1994, SITA, London, verwiesen.

In einer weiteren bevorzugten Ausführungsform werden zu den beschriebenen Comonomeren Monomere hinzugesetzt, die eine hohe statische Glasübergangstemperatur besitzen. Als Komponenten eigenen sich aromatische Vinylverbindungen, wie z. B. Styrol, wobei die aromatischen Kerne vorzugsweise aus $C_4$- bis $C_{18}$-Bausteinen bestehen und auch Heteroatome enthalten können. Besonders bevorzugte Beispiele sind 4-Vinylpyridin, N-Vinylphthalimid, Methylstyrol, 3,4-Dimethoxystyrol, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus diesen Monomeren, wobei diese Aufzählung nicht abschließend ist.

In einer sehr bevorzugten Ausführungsform der Erfindung ist die Comonomerzusammensetzung der Schicht B, abgesehen von dem Kreide-Füllstoffzusatz, identisch mit denen der Schicht A und C. Schicht B unterscheidet sich in diesem Fall nur durch den Kreide-Füllstoffzusatz.

Ferner können den erfindungsgemäßen Polymeren der Schichten A, B, und C Harze beigemischt sein. Als zuzusetzende klebrig machende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Weiterhin können optional Weichmacher (Plastfizierungsmittel), Keimbildner, Blähmittel, Compoundierungsmittel und/oder Alterungsschutzmittel, z. B. in Form von primären und sekundären Antioxidantien oder in Form von Lichtschutzmitteln zugesetzt sein.

Zusätzlich können Vernetzer und Promotoren zur Vernetzung der Schichten A, B und C beigemischt werden. Geeignete Vernetzer für die Elektronenstrahlvernetzung und UV-Vernetzung sind beispielsweise bi- oder multifunktionelle Acrylate, bi- oder multifunktionelle Isocyanate (auch in blockierter Form) oder bi- oder multifunktionelle Epoxide.

Zu einer optionalen Vernetzung - wenn auch nicht zu bevorzugenden Vernetzung - mit UV-Licht können den Schichten A, B oder C UV-absorbierende Photoinitiatoren zugesetzt werden. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte $\alpha$-Ketole, wie z. B. 2-Methoxy-2-hydroxypropiophenon, aromatische Sulfonylchloride, wie z. B. 2-Naphthylsulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin- oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London herangezogen werden.

Schicht B sollte zumindest 15 Gew.-%, aber maximal 60 Gew-% Kreide, bezogen auf Schicht B, enthalten. In einer bevorzugten Ausführungsform wird Mikrosöhl-Kreide eingesetzt. Durch den Kreidezusatz kann Schicht B ihre haftklebrigen Eigenschaften verlieren. In diesem Fall sollten aber die elastischen Eigenschaften der Schicht B erhalten bleiben.

Verfahren zur Herstellung der Schichten A, B und C

Zur Polymerisation werden die Monomere der Schichten A und C dermaßen gewählt, daß die resultierenden Polymere bei Raumtemperatur oder höheren Temperaturen als Haftklebemassen eingesetzt werden können, insbesondere derart, daß die resultierenden Polymere haftklebende Eigenschaften entsprechend dem "Handbook of Pressure Sensitive Adhesive Technology" von Donatas Satas (van Nostrand, New York 1989) besitzen. Zur Erzielung einer bevorzugten Glasübergangstemperatur $T_G$ der Polymere von $T_G \leq 25\,°C$ werden entsprechend dem vorstehend gesagten die Monomere sehr bevorzugt derart ausgesucht und die mengenmäßige Zusammensetzung der Monomermischung vorteilhaft derart gewählt, daß sich nach der *Fox*-Gleichung (G1) (vgl. T.G. Fox, Bull. Am. Phys. Soc. 1(1956)123) der gewünschte $T_G$-Wert für das Polymer ergibt.

$$\frac{1}{T_G} = \sum_n \frac{w_n}{T_{G,n}} \qquad (G1)$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Zur Herstellung der Poly(meth)acrylate der Schichten A, B und C werden vorteilhaft konventionelle radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben-Weyl, Methoden der Organischen Chemie, Vol. E 19a, S. 60-147, beschrieben. Diese Methoden werden vorzugsweise in Analogie angewendet.

Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropylpercarbonat, t-Butylperoktoat, Benzpinacol. In einer sehr bevorzugten Auslegung wird als radikalischer Initiator 1,1'-Azo-bis-(cyclohexancarbonsäurenitril) (Vazo 881™ der Fa. DuPont) oder Azodisobutyronitril (AIBN) verwendet.

Für die Schicht B kann der Füllstoff Kreide den Monomeren vor der Polymerisation und/oder nach Beendigung der Polymerisation beigemischt werden.

Die mittleren Molekulargewichte $M_w$ der bei der radikalischen Polymerisation entstehenden Haftkiebemassen werden sehr bevorzugt derart gewählt, daß sie in einem Bereich $M_w$ von 50.000 bis 2.000.000 g/mol liegen. Die Bestimmung des mittleren Molekulargewichtes erfolgt über Größenausschlußchromatographie (GPC) oder Matrixunterstützte Laser-Desorption/Ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z. B. Hexan, Heptan, Octan, Isooctan), aromatische Kohlenwasserstoffe (z. B. Benzol, Toluol, Xylol), Ester (z. B. Essigsäureethylester, Essigsäurepropyl-, -butyl- oder -hexylester), halogenierte Kohlenwasserstoffe (z. B. Chlorbenzol), Alkanole (z. B. Methanol, Ethanol, Ethylenglycol, Ethylenglycolmonomethylether) und Ether (z. B. Diethylether, Dibutylether) oder Gemische davon. Die wäßrigen Polymerisationsreaktionen können mit einem mit Wasser mischbaren oder hydrophilen Colösungsmittel versetzt werden, um zu gewährleisten, daß das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 2 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Für die Herstellung kann es auch von Vorteil sein, die Polyacrylate in Substanz zu polymerisieren. Hier eignet sich insbesondere die Präpolymerisationstechnik. Die Polymerisation wird mit UV-Licht initiiert, aber nur zu einem geringen Umsatz von ca. 10 bis 30 % geführt. Anschließend kann dieser Polymersirup z. B. in Folien eingeschweißt werden (im einfachsten Fall Eiswürfelfolien) und dann in Wasser zu hohem Umsatz durchpolymerisiert werden. Diese Pellets lassen sich dann als Acrylatschmelzkleber einsetzen, wobei für den Aufschmelzvorgang besonders bevorzugt Folienmaterialien eingesetzt werden, die mit dem Polyacrylat kompatibel sind. Auch für diese Präparationsmethode lassen sich die thermisch-leitfähigen Materialzusätze vor oder nach der Polymerisation zusetzen.

Ein anderes vorteilhaftes Herstellungsverfahren für die Poly(meth)acrylate ist die anionische Polymerisation. Hier werden als Reaktionsmedium bevorzugt inerte Lösungsmittel verwendet, wie z. B. aliphatische und cycloaliphatische Kohlenwasserstoffe, oder auch aromatische Kohlenwasserstoffe.

Das lebende Polymer wird in diesem Fall im allgemeinen durch die Struktur $P_L$(A)-Me repräsentiert, wobei Me ein Metall der Gruppe I, wie z. B. Lithium, Natrium oder Kalium, und $P_L$(A) ein wachsender Polymerblock aus den

Monomeren A ist. Die Molmasse des herzustellenden Polymers wird durch das Verhältnis von Initiatorkonzentration zu Monomerkonzentration kontrolliert. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, daß Acrylatmonomere, wie z. B. n-Butylacrylat und 2-Ethylhexylacrylat, direkt polymerisiert werden können und nicht im Polymer durch eine Umesterung mit dem entsprechenden Alkohol generiert werden müssen.

Zur Herstellung von Poly(meth)acrylaten mit einer engen Molekulargewichtsverteilung eignen sich auch kontrollierte radikalische Polymerisationsmethoden. Zur Polymerisation wird dann bevorzugt ein Kontrollreagenz der allgemeinen Formel eingesetzt:

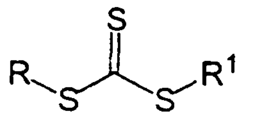

(I)

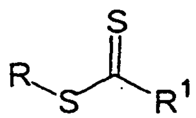

(II)

worin R und $R^1$ unabhängig voneinander aus der Gruppe gewählt werden, die

- verzweigte und unverzweigte $C_1$- bis $C_{18}$-Alkylreste; $C_3$- bis $C_{18}$-Alkenylreste; $C_3$- bis $C_{18}$-Alkinylreste;
- $C_1$- bis $C_{18}$-Alkoxyreste;
- durch zumindest eine OH-Gruppe oder ein Halogenatom oder einen Silylether substituierte $C_1$- bis $C_{18}$-Alkylreste; $C_3$- bis $C_{18}$-Alkenylreste; $C_3$- bis $C_{18}$-Alkinylreste;
- $C_2$- bis $C_{18}$-Hetero-Alkylreste mit mindestens einem O-Atom und/oder einer NR*-Gruppe in der Kohlenstoffkette, wobei R* ein beliebiger (insbesondere organischer) Rest sein kann;
- mit zumindest einer Estergruppe, Amingruppe, Carbonatgruppe, Cyanogruppe, Isocyanogruppe und/oder Epoxidgruppe und/oder mit Schwefel substituierte $C_1$- bis $C_{18}$-Alkylreste, $C_3$- bis $C_{18}$-Alkenylreste, $C_3$- bis $C_{18}$-Alkinylreste;
- $C_3$-bis $C_{12}$-Cycloalkylreste; $C_6$-bis $C_{18}$- Aryl- oder Benzylreste
- Wasserstoff

umfaßt.

Kontrollreagenzien des Typs (I) bestehen bevorzugt aus folgenden weiter eingeschränkten Verbindungen:

Halogenatome sind hierbei bevorzugt F, Cl, Br oder I, stärker bevorzugt Cl und Br. Als Alkyl-, Alkenyl- und Alkinylreste in den verschiedenen Substituenten eignen sich hervorragend sowohl lineare als auch verzweigte Ketten.

Beispiele für Alkylreste, welche 1 bis 18 Kohlenstoffatome enthalten, sind Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl.

Beispiele für Alkenylreste mit 3 bis 18 Kohlenstoffatomen sind Propenyl, 2-Butenyl, 3-Butenyl, Isobutenyl, n-2,4-Pentadienyl, 3-Methyl-2-butenyl, n-2-Octenyl, n-2-Dodecenyl, Isododecenyl und Oleyl.

Beispiele für Alkinyl mit 3 bis 18 Kohlenstoffatomen sind Propinyl, 2-Butinyl, 3-Butinyl, n-2-Octinyl und n-2-Octadecinyl.

Beispiele für Hydroxy-substituierte Alkylreste sind Hydroxypropyl, Hydroxybutyl oder Hydroxyhexyl.

Beispiele für Halogen-substituierte Alkylreste sind Dichlorobutyl, Monobromobutyl oder Trichlorohexyl.

Ein geeigneter $C_2$- bis $C_{18}$-Hetero-Alkylrest mit mindestens einem O-Atom in der Kohlenstoffkette ist beispielsweise $-CH_2-CH_2-O-CH_2-CH_3$.

Als $C_3$- bis $C_{12}$-Cycloalkylreste dienen beispielsweise Cyclopropyl, Cyclopentyl, Cyclohexyl oder Trimethylcyclohexyl.

Als $C_6$- bis $C_{18}$-Arylreste dienen beispielsweise Phenyl, Naphthyl, Benzyl, 4-tert.-Butylbenzyl oder weitere substituierte Phenyl, wie z.B. Ethyl, Tofuol, Xylol, Mesitylen, Isopropylbenzol, Dichlorobenzol oder Bromtoluol.

Die vorstehenden Beispiele dienen nur als Beispiele für die jeweiligen Verbindungsgruppen und besitzen keinen Anspruch auf Vollständigkeit.

Weiterhin sind auch Verbindungen der folgenden Typen als Kontrollreagenzien einsetzbar

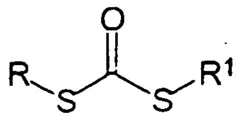

(III)

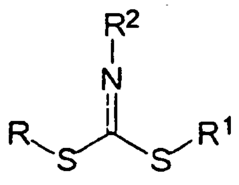

(IV)

wobei $R^2$ ebenfalls unabhängig von R und $R^1$ aus der oben aufgeführten Gruppe für diese Reste gewählt werden kann.

Beim konventionellen 'RAFT-Prozeß' wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflußt, die Restmonomere im Aufkonzentrationsprozeß das Lösemittelrecyclat verunreinigen und die entsprechenden Selbstklebebänder ein sehr hohes Ausgasungsverhalten zeigen würden. Um diesen Nachteil niedriger Umsätze zu umgehen, wird in einer besonders bevorzugten Ausführungsform die Polymerisation mehrfach initiiert.

Als weitere kontrollierte radikalische Polymerisationsmethode können Nitroxid-gesteuerte Polymerisationen durchgeführt werden. Zur Radikalstabilisierung werden in günstiger Vorgehensweise Nitroxide des Typs (Va) oder (Vb) eingesetzt:

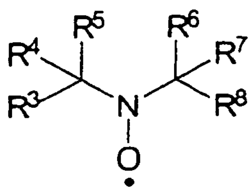

(Va)

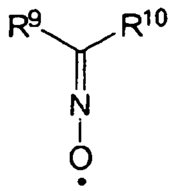

(Vb)

wobei $R^3$, $R^4$, $R^5$, $R^6$, $R^7$, $R^8$, $R^9$, $R^{10}$ unabhängig voneinander folgende Verbindungen oder Atome bedeuten:

i) Halogenide, wie z.B. Chlor, Brom oder Iod;

ii) lineare, verzweigte, cyclische und heterocyclische Kohlenwasserstoffe mit 1 bis 20 Kohlenstoffatomen, die gesättigt, ungesättigt oder aromatisch sein können;

iii) Ester $-COOR^{11}$, Alkoxide $-OR^{12}$ und/oder Phosphonate $-PO(OR^{13})_2$, wobei $R^{11}$, $R^{12}$ oder $R^{13}$ für Reste aus der Gruppe ii) stehen.

Verbindungen des Typs (Va) oder (Vb) können auch an Polymerketten jeglicher Art gebunden sein (wobei vorzugsweise zumindest einer der oben genannten Reste eine derartige Polymerkette darstellt) und somit zum Aufbau von Polyacrylathaftklebemassen genutzt werden.

Stärker bevorzugt werden kontrollierte Regler für die Polymerisation von Verbindungen des Typs:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimin-PROXYL, 3-Aminomethyl-PROXYL, 3-Methoxy-PROXYL, 3-t-Butyl-PROXYL, 3,4-Di-t-butyl-PROXYL

- 2,2,6,6-Tetramethyl-1-piperidinyloxypyrrolidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methylpropylnitroxid
- N-tert.-Butyl-1-(2-naphtyl)-2-methylpropylnitroxid
- N-tert.-Butyl-1-diethylphosphono-2,2-dimethylpropylnitroxid
- N-tert.-Butyl-1-dibenzylphosphono-2,2-dimethylpropylnitroxid
- N-(1-Phenyl-2-methyl propyl)-1-diethylphosphono-1-methylethylnitroxid
- Di-t-Butylnitroxid
- Diphenylnitroxid
- t-Butyl-t-amylnitroxid.

Eine Reihe weiterer Polymerisationsmethoden, nach denen die Haftklebemassen in alternativer Vorgehensweise hergestellt werden können, lassen sich aus dem Stand der Technik wählen:

US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterocyclische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum UPAC World-Polymer Meeting 1998, Gold Coast).

Als weitere kontrollierte Polymerisationsmethode läßt sich in vorteilhafter Weise zur Synthese der Poly(meth) acrylate die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

Beschichtungsverfahren, Ausrüstung des Trägermaterials mit der erfindungsgemäßen Haftklebemasse

Zur Herstellung der erfindungsgemäßen Hafklebemassen werden die oben beschriebenen Polymere bevorzugt als Hotmelt-Systeme (also aus der Schmelze) beschichtet oder in der Wärme zueinanderkaschiert. Für das Herstellungsverfahren kann es daher erforderlich sein, das Lösemittel von den Poly(meth)acrylaten zu entfernen. Hier können im Prinzip alle dem Fachmann bekannten Verfahren eingesetzt werden. Ein sehr bevorzugtes Verfahren ist die Aufkonzentration über einen Ein- oder Doppelschneckenextruder. Der Doppelschneckenextruder kann gleich- oder gegenläufig betrieben werden. Das Lösemittel oder Wasser wird bevorzugt über mehrere Vakuumstufen abdestilliert. Zudem wird je nach Destillationstemperatur des Lösemittels gegengeheizt. Die Restlösemittelanteile betragen bevorzugt < 1 %, stärker bevorzugt < 0,5 % und besonders bevorzugt < 0,2 %. Der Hotmelt wird aus der Schmelze weiterverarbeitet.

Weiterhin wird in einer bevorzugten Ausführungsform für die Schicht B der Haftklebemasse der Kreidefüllstoff zu dem Hotmelt in der Schmelze hinzugegeben. Zum homogenen Kompoundieren in die Schmelze wird bevorzugt ein Doppelschneckenextruder oder ein Planetwalzenextruder eingesetzt.

In dem bevorzugten Verfahren werden die Haftklebemassen der einzelnen Schichten durch eine Extrusionsdüse, besonders bevorzugt durch eine Coextrusionsdüse beschichtet. Mit der Coextrusionsdüse werden die drei Schichten A, B und C in einem Schritt hergestellt. Für diese Form der Beschichtung werden die drei Polymere getrennt zur Coextrusionsdüse geführt, so daß auch drei unterschiedliche Schichten A, B und C hergestellt werden können.

Die verwendeten Extrusionsdüsen können vorteilhaft aus einer der drei folgenden Kategorien stammen: T-Düse, Fischschwanz-Düse und Bügel-Düse. Die einzelnen Typen unterscheiden sich durch die Gestalt ihres Fließkanals. Zur Beschichtung wird besonders bevorzugt mit einer Bügeldüse auf einen Träger beschichtet, und zwar derart, daß durch eine Relativbewegung von Düse zu Träger eine Polymerschicht auf dem Träger entsteht.

Die erfindungsgemäße Haftklebemasse kann in einer bevorzugten Ausführungsform zu einem Transfer-Tape verarbeitet werden. Als Trägermaterial eignen sich z. B. alle silikonisierten oder fluorierten Folien mit einer Releasewirkung. Als Folienmaterialien seien hier nur beispielhaft BOPP, MOPP, PET, PVC, PUR, PE, PE/EVA, EPDM, PP und

PE genannt. Weiterhin lassen sich für Transfer-Tapes auch Trennpapiere (Glassine-Papiere, Kraft-Papiere, polyolefinisch beschichtete Papiere) einsetzen.

Zur optionalen UV-Vernetzung wird die erfindungsgemäße Haftklebemasse mittels kurzwelliger ultravioletter Bestrahlung in einem Wellenlängenbereich von 200 bis 400 nm, je nach verwendetem UV-Photoinitiator, bestrahlt, insbesondere unter Verwendung von Quecksilber-Hochdruck- oder -Mitteldruck-Lampen bei einer Leistung von 80 bis 240 W/cm. Die Bestrahlungsintensität wird der jeweiligen Quantenausbeute des UV-Photoinitiators, dem einzustellenden Vernetzungsgrad und dem Maße der Orientierung angepaßt.

In einem bevorzugten Vernetzungsverfahren wird die erfindungsgemäße Haftklebemasse mit Elektronenstrahlen vernetzt. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhome, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 und 150 kGy, insbesondere zwischen 20 und 100 kGy. Es können auch beide Vernetzungsverfahren oder andere Verfahren, die hochenergetische Bestrahlung ermöglichen, angewendet werden.

## Beispiele

Die Erfindung wird im folgenden durch Beispiele beschrieben, ohne sich durch die Wahl der untersuchten Proben unnötig beschränken zu wollen.

Folgende Testmethoden wurden angewendet .

### 180°-Klebekrafttest (Test A)

Ein 20 mm breites Klebeband, das aus einer auf einen Polyester oder silikonisiertes Trennpapier gecoateten Acrylathaftklebemasse bestand, wurde auf Stahlplatten (Test A1) oder auf PE-Platten (Test A2) aufgebracht. Das Klebeband wurde zweimal mit einem 2 kg Gewicht auf das Substrat aufgedrückt. Das Klebeband wurde anschließend sofort mit 30 mm/min und im 180°-Winkel vom Substrat abgezogen. Die Stahlplatten wurden zweimal mit Aceton und einmal mit Isopropanol gewaschen. Es wurden jeweils neue PE-Platten eingesetzt. Die Meßergebnisse sind in N/cm angegeben und sind gemittelt aus drei Messungen. Alle Messungen wurden bei Raumtemperatur unter klimatisierten Bedingungen durchgeführt.

### Scherfestigkeit (Test B)

Ein 13 mm breiter Streifen des Klebebandes wurde auf eine glatte Stahloberfläche, die dreimal mit Aceton und einmal mit Isopropanol gereinigt wurde, aufgebracht. Die Auftragsfläche betrug 20 mm * 13 mm (Länge * Breite). Anschließend wurde mit 2 kg Anpreßdruck das Klebeband viermal auf den Stahlträger gedrückt. Bei Raumtemperatur wurde mit einem 1 kg-Gewicht belastet. Die gemessenen Scherstandzeiten sind in Minuten angegeben und entsprechen dem Mittelwert aus drei Messungen.

### Herstellung der Polymere für die Schichten A und C

### Polymer 1

Ein für radikalische Polymerisationen konventioneller 200-L-Reaktor wurde mit 20 kg Methylacrylat, 60 kg 2-Ethylhexylacrylat, 10 kg Acrylsäure und 53,3 kg Aceton/Isopropanol (97 : 3) befüllt. Nach 45 Minuten Durchleiten mit Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AIBN hinzugegeben. Nach 5 h und 10 h wurde mit jeweils 15 kg Aceton/Isopropanol (97:3) verdünnt. Nach 6 und 8 h wurden jeweils 100 g Dicyclohexylperoxydicarbonat (Perkadox 16®, Fa. Akzo Nobel), gelöst in jeweils 800 g Aceton, hinzugegeben. Die Reaktion wurde nach 24 h Reaktionszeit abgebrochen und auf Raumtemperatur abgekühlt. Anschließend wird das Polymer in der Wärme bei 120 °C im Vakuum vom Lösemittel befreit.

### Polymer 2

Ein für radikalische Polymerisationen konventioneller 200-L-Reaktor wurde mit 10 kg N-tert.-Butylacrylamid,

30 kg 2-Ethylhexylacrylat, 30 kg Butylacrylat, 10 kg Acrylsäure und 53,3 kg Aceton/Isopropanol (97 : 3) befüllt. Nach 45 Minuten Durchleiten mit Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AIBN hinzugegeben. Nach 5 h und 10 h wurde mit jeweils 15 kg Aceton/Isopropanol (97 : 3) verdünnt. Nach 6 und 8 h wurden jeweils 100 g Dicyclohexylperoxydicarbonat (Perkadox 16, Fa. Akzo Nobel), gelöst in jeweils 800 g Aceton, hinzugegeben. Die Reaktion wurde nach 24 h Reaktionszeit abgebrochen und auf Raumtemperatur abgekühlt. Anschließend wird das Polymer in der Wärme bei 120 °C im Vakuum vom Lösemittel befreit.

Herstellung der Polymere für Schicht B

Polymer 3

Ein für radikalische Polymerisationen konventioneller 200-L-Reaktor wurde mit 26 kg Methylacrylat, 32 kg 2-Ethylhexylacrylat, 32 kg Butylacrylat und 53,3 kg Aceton/Isopropanol (85 : 15) befüllt. Nach 45 Minuten Durchleiten mit Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AIBN hinzugegeben. Nach 5 h und 10 h wurde mit jeweils 15 kg Aceton/Isopropanol (85 : 15) verdünnt. Nach 6 und 8 h wurden jeweils 100 g Dicyclohexylperoxydicarbonat (Perkadox 16, Fa. Akzo Nobel), gelöst in jeweils 800 g Aceton hinzugegeben. Die Reaktion wurde nach 24 h Reaktionszeit abgebrochen und auf Raumtemperatur abgekühlt.

Anschließend wurde mit 20 Gew.-% eines C5-C9 KW-Harzes der Firma VFT Rüttgers (TK 90 H), mit 35 Gew.-% Kreide (Mikrosöhl) mit 5 Gew.-% eines Pthalsäureesters Palatinol™ AH (BASF AG) und 1 Gew.-% trifunktionellen Acrylats (SR 444, Fa. Cray Valley) in Lösung abgemischt und anschließend in der Wärme bei 120 °C im Vakuum vom Lösemittel befreit.

Polymer 4

Ein für radikalische Polymerisationen konventioneller 200-L-Reaktor wurde mit 26 kg Isobornytacrylat, 32 kg 2-Ethylhexylacrylat, 32 kg Butylacrylat und 53,3 kg Aceton/Isopropanol (85 : 15) befüllt. Nach 45 Minuten Durchleiten mit Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AIBN hinzugegeben. Nach 5 h und 10 h wurde mit jeweils 15 kg Aceton/Siedegrenzenbenzin 60/95 (50 : 50) verdünnt. Nach 6 und 8 h wurden jeweils 100 g Dicyclohexylperoxydicarbonat (Perkadox 16, Fa. Akzo Nobel), gelöst in jeweils 800 g Aceton, hinzugegeben. Die Reaktion wurde nach 24 h Reaktionszeit abgebrochen und auf Raumtemperatur abgekühlt.

Anschließend wurde mit 20 Gew.-% eines C5-C9 KW-Harzes der Firma VFT Rüttgers (TK 90 H), mit 40 Gew.-% Kreide (Mikrosöhl) und 1 Gew.-% trifunktionellen Acrylats (SR 444, Fa. Cray Valley) in Lösung abgemischt und anschließend in der Wärme bei 120°C im Vakuum vom Lösemittel befreit.

Beispiel 1:

Schicht A: Polymer 1 (25 g/$m^2$)
Schicht B: Polymer 3 (200 g/$m^2$)
Schicht C: Polymer 1 (25 g/$m^2$)

Beispiel 2:

Schicht A: Polymer 2 (25 g/$m^2$)
Schicht B: Polymer 3 (200 g/$m^2$)
Schicht C: Polymer 2 (25 g/$m^2$)

Beispiel 3:

Schicht A: Polymer 2 (25 $g/m^2$)
Schicht B: Polymer 3 (200 $g/m^2$)
Schicht C: Polymer 2 (25 $g/m^2$)

Beispiel 4:

Schicht A: Polymer 2 (25 $g/m^2$)
Schicht B: Polymer 4 (200 $g/m^2$)
Schicht C: Polymer 2 (25 $g/m^2$)

Herstellung der Beispiele

Die Polymere 1 und 2 wurden aus Lösung über einen Streichbalken auf ein mit 1,5 $g/m^2$ Silikon beschichtetes (Polydimethylsiloxan) Glassine-Trennpapier beschichtet. Anschließend wurden die Polymere in einem Trockenkanal mit max. 120 °C und einer Bahngeschwindigkeit von 10 min/mm getrocknet.

Die Vernetzung erfolgte über Elektronenstrahlvernetzung mit einem Gerät der Fa. Electron Crosslinking AB, Halmstad, Schweden. Das beschichtete und getrocknete Polymer wurde dabei über eine standardmäßig vorhandene Kühlwalze unter dem Lenard-Fenster des Beschleunigers hindurch geführt. Dabei wurde in der Bestrahlungszone der Luftsauerstoff durch Spülen mit reinem Stickstoff verdrängt. Die Bahngeschwindigkeit betrug jeweils 10 min/mm. Es wurde mit einer Beschleunigungsspannung von 180 kV und mit einer Dosis von 30 kGray durchstrahlt.

Die Polymerschicht B wurde auf Polymer 1 oder 2 über eine Bügel-Extrusionsdüse mit einem Düsenspalt von 600 μm und einer Beschichtungsbreite von 33 cm bei 170 °C (Massetemperatur) mit einer Bahngeschwindigkeit von 10 min/mm beschichtet. Die Schichtdicke betrug 200 μm. Zur Herstellung der erfindungsgemäßen Haftklebemasse wurde anschließend die Schicht C auf die Schicht B über eine auf 90 °C beheizte Walze kaschiert.

Für die Vernetzung der Schicht B und C mit Elektronenbestrahlung erfolgte die Vernetzung mit einem Gerät der Fa. Electron Crosslinking AB, Halmstad, Schweden von oben durch Schicht C. Das beschichtete Haftklebeband wurde dabei über eine standardmäßig vorhandene Kühlwalze unter dem Lenard-Fenster des Beschleunigers hindurch geführt. Dabei wurde in der Bestrahlungszone der Luftsauerstoff durch Spülen mit reinem Stickstoff verdrängt. Die Bahngeschwindigkeit betrug jeweils 10 min/mm. Es wurde mit einer Beschleunigungsspannung von 230 kV und mit einer Dosis von 30 kGray durchstrahlt.

Ergebnisse

Zur Beurteilung der klebtechnischen Eigenschaften wurden die Testmethoden A und B durchgeführt.
In folgender Tabelle 1 sind die klebtechnischen Daten für die Beispiele 1 bis 4 zusammengefaßt.

Tabelle 1: Übersicht der ermittelten klebtechnischen Eigenschaften

| Beispiel | Klebkraft auf Stahl (Test A1) | Klebkraft auf PE (Test A2) | Scherstandzeiten (Test B) |
|---|---|---|---|
| 1 | 10,2 N/cm | 2,7 N/cm | + 10000 min |
| 2 | 11,3 N/cm | 3,0 N/cm | + 10000 min |
| 3 | 10,5 N/cm | 2,5 N/cm | + 10000 min |
| 4 | 12,1 N/cm | 3,2 N/cm | + 10000 min |
| Die Angabe "+ 10000 min" soll ausdrücken, daß der Test nach 10000 min abgebrochen wurde. | | | |

Der Vergleich der klebtechnischen Eigenschaften zeigt, daß mit den erfindungsgemäßen Haftklebemassen sehr hohe Scherfestigkeiten und gleichzeitig höhere Klebkräfte sowohl auf Stahl als auch auf Polyethylen erreicht werden.

Liste der verwendeten Bezugszeichen

1 Schicht A
2 Schicht B
3 Schicht C

## Patentansprüche

1. Haftklebemasse, umfassend

(a) eine erste Schicht einer ersten Polyacrylathaftklebemasse, die zumindest 50 Gew.-%, bezogen auf die erste Polyacrylathaftklebemasse, eines Acrylsäureesters und/oder Methacrylsäureesters der Formel $CH_2=C(R_1)(COOR_2)$ umfaßt, wobei $R_1$ H oder $CH_3$ darstellt und $R_2$ eine lineare, verzweigte oder cyclische Alkylkette mit 1 bis 20 Kohlenstoffatomen darstellt;
(b) eine zweite Schicht, umfassend

(b1) ein Polyacrylat, das zumindest 50 Gew.-%, bezogen auf das Polyacrylat, eines Acrylsäureesters und/oder Methacrylsäureesters mit der Formel $CH_2=C(R_1)(COOR_2)$ umfaßt, wobei $R_1$ H oder $CH_3$ darstellt und $R_2$ eine lineare, verzweigte oder cyclische Alkylkette mit 1 bis 20 Kohlenstoffatomen darstellt, und
(b2) 15 bis 60 Gew.-%, bezogen auf die zweite Schicht, Kreide; sowie

(c) eine dritte Schicht einer zweiten Polyacrylathaftklebemasse, die zumindest 50 Gew.-%, bezogen auf die zweite Polyacrylathaftklebemasse, eines Acrylsäureesters und/oder Methacrylsäureesters der Formel $CH_2=C(R_1)(COOR_2)$ umfaßt, wobei $R_1$ H oder $CH_3$ darstellt und $R_2$ eine lineare, verzweigte oder cyclische Alkylkette mit 1 bis 20 Kohlenstoffatomen darstellt.

2. Haftklebemasse nach Anspruch 1, **dadurch gekennzeichnet, daß** die erste Schicht und die dritte Schicht dieselbe Zusammensetzung aufweisen.

3. Haftklebemasse nach Anspruch 1 oder Anspruch 2, **dadurch gekennzeichnet, daß** die erste Polyacrylathaftklebemasse, die zweite Polyacrylathaftklebemasse und das Polyacrylat der zweiten Schicht dieselbe Zusammensetzung aufweisen.

4. Haftklebemasse nach einem der vorstehenden Anspruche, **dadurch gekennzeichnet, daß** die zweite Schicht zwischen der ersten Schicht und der dritten Schicht angeordnet ist.

5. Haftklebemasse nach einem der vorstehenden Ansprüche, **dadurch gekennzeichnet, daß** die erste Schicht eine Schichtdicke von 5 bis 150 µm aufweist, die zweite Schicht eine Schichtdicke von 10 µm bis 1,5 mm aufweist und die dritte Schicht eine Schichtdicke von 5 bis 150 µm aufweist.

6. Verfahren zur Herstellung einer Haftklebemasse nach einem der Ansprüche 1 bis 5, **dadurch gekennzeichnet, daß** die Kreide dem Polyacrylat der Schicht B in der Schmelze zugesetzt und anschließend in der Schmelze homogen verteilt wird.

7. Verwendung einer Haftklebemasse nach einem der Ansprüche 1 bis 6 für ein Haftklebeband.

8. Verwendung einer Haftklebemasse nach einem der Ansprüche 1 bis 6 für ein Haftklebeband für ein Transfer-Tape.

## Claims

1. Pressure-sensitive adhesive comprising

(a) a first layer of a first polyacrylate pressure-sensitive adhesive containing at least 50% by weight, based on the first polyacrylate pressure-sensitive adhesive, of an acrylic and/or methacrylic ester of the formula $CH_2=C$

$(R_1)(COOR_2)$ where $R_1$ is H or $CH_3$ and $R_2$ is a linear, branched or cyclic alkyl chain having 1 to 20 carbon atoms;
(b) a second layer comprising

(b1) a polyacrylate containing at least 50% by weight, based on the polyacrylate, of an acrylic and/or methacrylic ester of the formula $CH_2=C(R_1)(COOR_2)$ where $R_1$ is H or $CH_3$ and $R_2$ is a linear, branched or cyclic alkyl chain having 1 to 20 carbon atoms, and
(b2) from 15% to 60% by weight, based on the second layer, of chalk; and

(c) a third layer of a second polyacrylate pressure-sensitive adhesive containing at least 50% by weight, based on the second polyacrylate pressure-sensitive adhesive, of an acrylic and/or methacrylic ester of the formula $CH_2=C(R_1)(COOR_2)$ where $R_1$ is H or $CH_3$ and $R_2$ is a linear, branched or cyclic alkyl chain having 1 to 20 carbon atoms.

**2.** Pressure-sensitive adhesive according to Claim 1, **characterized in that** the first layer and the third layer have the same composition.

**3.** Pressure-sensitive adhesive according to Claim 1 or Claim 2, **characterized in that** the first polyacrylate pressure-sensitive adhesive, the second polyacrylate pressure-sensitive adhesive and the polyacrylate of the second layer have the same composition.

**4.** Pressure-sensitive adhesive according to any one of the preceding claims, **characterized in that** the second layer lies between the first layer and the third layer.

**5.** Pressure-sensitive adhesive according to any one of the preceding claims, **characterized in that** the first layer has a thickness of from 5 to 150 µm, the second layer a thickness of from 10 µm to 1.5 mm and the third layer a thickness of from 5 to 150 µm.

**6.** Process for preparing a pressure-sensitive adhesive according to any one of Claims 1 to 5, **characterized in that** the chalk is added to the polyacrylate of layer B in the melt and is subsequently homogeneously distributed in the melt.

**7.** Use of a pressure-sensitive adhesive according to any one of Claims 1 to 6 for a pressure-sensitive adhesive tape.

**8.** Use of a pressure-sensitive adhesive according to any one of Claims 1 to 6 for a pressure-sensitive adhesive tape for a transfer tape.

## Revendications

**1.** Matière auto-adhésive comprenant

(a) une première couche d'une première matière auto-adhésive de polyacrylate, qui comprend au moins 50 % en poids, par rapport à la première matière auto-adhésive de polyacrylate, d'un ester acrylique et/ou d'un ester méthacrylique de formule $CH_2=C(R_1)$ $(COOR_2)$, dans laquelle $R_1$ représente un atome d'hydrogène ou un groupe $CH_3$ et $R_2$ représente une chaîne alkyle linéaire, ramifiée ou cyclique renfermant de 1 à 20 atomes de carbone ;
(b) une deuxième couche comprenant

(b1) un polyacrylate qui comprend au moins 50 % en poids, par rapport au polyacrylate, d'un ester acrylique et/ou d'un ester méthacrylique de formule $CH_2=C(R_1)(COOR_2)$, dans laquelle $R_1$ représente un atome d'hydrogène ou un groupe $CH_3$ et $R_2$ représente une chaîne alkyle linéaire, ramifiée ou cyclique renfermant de 1 à 20 atomes de carbone, et
(b2) de 15 à 60 % en poids, par rapport à la deuxième couche, de craie ; ainsi que

(c) une troisième couche d'une deuxième matière auto-adhésive de polyacrylate, qui comprend au moins 50 % en poids, par rapport à la deuxième matière auto-adhésive de polyacrylate, d'un ester acrylique et/ou d'un ester méthacrylique de formule $CH_2=C(R_1)(COOR_2)$, dans laquelle $R_1$ représente un atome d'hydrogène ou un groupe $CH_3$ et $R_2$ représente une chaîne alkyle linéaire, ramifiée ou cyclique renfermant de 1 à 20 atomes de carbone.

2. Matière auto-adhésive selon la revendication 1, **caractérisée en ce que** la première couche et la troisième couche présentent la même composition.

3. Matière auto-adhésive selon la revendication 1 ou la revendication 2, **caractérisée en ce que** la première matière auto-adhésive de polyacrylate, la deuxième matière auto-adhésive de polyacrylate et le polyacrylate de la deuxième couche présentent la même composition.

4. Matière auto-adhésive selon l'une quelconque des revendications précédentes, **caractérisée en ce que** la deuxième couche est disposée entre la première couche et la troisième couche.

5. Matière auto-adhésive selon l'une quelconque des revendications précédentes, **caractérisée en ce que** la première couche présente une épaisseur de couche de 5 à 150 μm, la deuxième couche présente une épaisseur de couche de 10 μm à 1,5 mm et la troisième couche présente une épaisseur de couche de 5 à 150 μm.

6. Procédé de production d'une matière auto-adhésive selon l'une quelconque des revendications 1 à 5, **caractérisé en ce que** la craie du polyacrylate de la couche B est ajoutée dans la masse fondue et ensuite répartie de façon homogène dans la masse fondue.

7. Utilisation d'une matière auto-adhésive selon l'une quelconque des revendications 1 à 6 pour un ruban auto-adhésif.

8. Utilisation d'une matière auto-adhésive selon l'une quelconque des revendications 1 à 6 pour un ruban auto-adhésif pour un ruban de transfert.

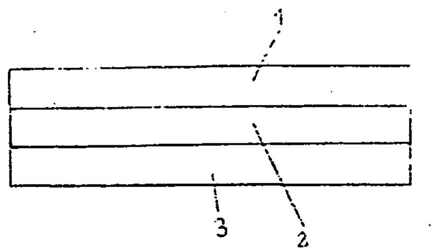


Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9801478 A1
- US 4581429 A
- WO 9813392 A1
- EP 735052 A1
- WO 9624620 A1
- WO 9844008 A1
- DE 19949352 A1
- EP 0824111 A1
- EP 826698 A1
- EP 824110 A1
- EP 841346 A1
- EP 850957 A1
- US 5945491 A
- US 5854364 A
- US 5789487 A


### In der Beschreibung aufgeführte Nicht-Patentliteratur


- **DONATAS SATAS.** Handbook of Pressure Sensitive Adhesive Technology. 1989
- **T.G. FOX.** *Bull. Am. Phys. Soc.,* 1956, vol. 1, 123
- **HOUBEN-WEYL.** *Methoden der Organischen Chemie,* vol. E 19a, 60-147
- **HAWKER.** Beitrag zur Hauptversammlung. American Chemical Society, 1997
- **HUSEMANN.** *Beitrag zum UPAC World-Polymer Meeting,* 1998
- *Inks and Paints,* 1991, vol. 1